# EUROPEAN PATENT APPLICATION

(11) **EP 4 685 510 A1**
(43) Date of publication of application: **28.01.2026**
(21) Application number: 24190844.1
(22) Date of filing: 25.07.2024
(51) Int. Cl.: G01S 1/00, G08B 25/01, H04W 4/80, H04W 4/90, H04W 76/50

(54) **LOCALIZATION TECHNIQUE FOR INDIVIDUALS IN EMERGENCY SITUATIONS**

(71) Applicant: Axpo Power AG, 5401 Baden (CH)
(72) Inventor: NÄF, Stefan, 8630 Rüti ZH (CH); BLASER, Samuel, 8600 Dübendorf (CH); KRENN, Jürgen, 8105 Watt (CH)
(74) Representative: Röthinger, Rainer

(57) **Abstract**

A technique is presented for providing information indicative of a location of an individual within a region in which stationary beacons (110) wirelessly transmitting beacon identifiers are positioned. A method implementation of the technique comprises the following steps performed by a first mobile device (112) carried by the individual, wherein the individual also carries a second mobile device (114) configured to receive and store at least a first beacon identifier transmitted by any of the stationary beacons (110): detecting an event, wherein the event is associated with an emergency situation that potentially affects the individual; in response to detecting the event, obtaining from the second mobile device (114), using a short-range wireless communication technology, the first beacon identifier; and transmitting, using a cellular communication technology, first location information that includes or has been derived from the first beacon identifier.

## Description

### Technical Field

The present disclosure relates to a technique for providing location information in emergency situations. In more detail, a technique is presented for providing information indicative of a location of an individual within a region in which stationary beacons wirelessly transmitting beacon identifiers are positioned. The technique can be implemented as methods, computer program products, mobile devices or as an emergency response system.

### Background

During emergency situations within a certain region such as building, for example in the case of a fire, rescue services often lack critical information regarding the precise location of individuals inside. This lack of information can result in valuable time being lost during the undirected search for missing people, and may also increase the risk to the rescue personnel. In incidents that potentially affect only one individual, such as a fall, it is crucial that information about the emergency, including the individual's location, is promptly forwarded to rescue services.

Different localization systems have been developed to determine the locations of individuals in outdoor scenarios or within buildings. Satellite-based systems like the Global Positioning System (GPS) are often ineffective indoors due to the attenuation of their weak signals by roofs and walls. Consequently, many indoor localization systems utilize alternative communication technologies, such as short-range wireless communication techniques like Bluetooth^{®}, to gather location information. In these systems, stationary beacons are employed to wirelessly transmit beacon identifiers that can be associated with each beacon's location. A mobile device carried by an individual receives the Bluetooth signals when within range, thereby acquiring the beacon identifiers as location information. For instance, a smartphone configured to receive these signals can function as a relay and transmit the acquired location information to an emergency center.

DE 11 2021 004 806 T5 describes a system comprising several stationary beacons distributed throughout a building. A mobile signal transceiver carried by an individual receives signals from these beacons and transmits the acquired information to a cloud server where the location information is stored. Similarly, EP 3 557 551 B1 discloses a system in which mobile beacons carried by individuals transmit signals to stationary beacons, which then forward the information, including the identity and signal strength of the mobile beacon, to a server that generates the location information.

Known systems with stationary beacons suffer from various drawbacks. When using a short-range wireless communication technology such as Bluetooth, a high number of stationary beacons is required to cover a larger region adequately. The installation and maintenance of these numerous beacons can be expensive. Reducing the number of beacons would significantly cut costs. However, due to the limited transmission range of the stationary beacons, they cannot be spaced apart beyond a given maximum distance without giving rise to areas in which no beacon signals can be received. Secondly, a smartphone or similar mobile signal transceiver carried by an individual needs to continuously receive and process the beacon signals. This constant signal reception and processing leads to rapid battery depletion, compromising the system's practicality.

### Summary

There is a need for a localization technique that avoids one or more of the above, or other, drawbacks and permits to quickly forward essential location information to rescue services in an emergency event.

According to a first aspect, a method is presented for providing information indicative of a location of an individual within a region in which stationary beacons wirelessly transmitting beacon identifiers are positioned. The method comprises multiple steps performed by a first mobile device carried by the individual, wherein the individual also carries a second mobile device configured to receive and store at least a first beacon identifier transmitted by any of the stationary beacons. The steps performed by the first mobile device comprise detecting an event, wherein the event is associated with an emergency situation that potentially affects the individual. The steps further comprise obtaining from the second mobile device, in response to detecting the event and using a short-range wireless communication technology, the first beacon identifier. Still further, the steps performed by the first mobile device comprise transmitting, using a cellular communication technology, first location information that includes or has been derived from the first beacon identifier.

In one variant, the individual is located within a building and the first location information is indoor location information. In another variant, the individual is located outdoors and the first location information is outdoor location information. Both variants may be combined by deploying the stationary beacons both indoors and outdoors to cover a combined indoor/outdoor region.

The beacon identifiers may be received and transmitted in data packets, or simply packets. Such packets may include additional information depending on the transmission protocol in use.

The stationary beacons may be transmitting the beacon identifiers using the short-range wireless communication technology. In such a case, the first mobile device may be configured to directly obtain the first beacon identifier, using the short-range wireless communication technology, also from one of the stationary beacons. In certain implementations, the second mobile device may mimic a stationary beacon such that the first mobile device cannot differentiate between the first beacon identifier being obtained from any of the stationary beacons or from the second mobile device. In such implementations, a localization support application running on the first mobile device does not have to be programmed to operate in different reception modes depending on the source (second mobile device/stationary beacon) of the first beacon identifier. The transmission of the first beacon identifier by the second mobile device may conform to the same transmission protocol as used by the stationary beacons. Exemplary protocols that may be used by the second mobile device and the stationary beacons include iBeacon and Eddystone.

The short-range wireless communication technology may be Bluetooth. Additionally, or in the alternative, the cellular communication technology may comprise at least one of a 3G, 4G, 5G or higher cellular communication standard.

At a point in time when the first beacon identifier is obtained from the second mobile device, the first mobile device may not be able to receive any beacon identifier from the stationary beacons. At this, or at another point in time, the first mobile device may not be able receive any beacon identifier from the stationary beacons because at least one of the following or another condition applies:
a. the beacon identifiers are transmitted by the stationary beacons using the short-range wireless communication technology and the first mobile device is located out-of-range of any of the stationary beacons; and/or
b. the first mobile device does not support a communication technology used by the stationary beacons to transmit the beacon identifiers.

The first mobile device may be configured to perform one or more dedicated steps to obtain the first beacon identifier. These one or more steps may be triggered by detection of the emergency event that potentially affects the individual. For example, obtaining the first beacon identifier may comprise the step of searching (e.g., scanning), in response to detecting the event, for signals containing beacon identifiers. Additionally, or in the alternative, obtaining the first beacon identifier may comprise the step receiving the first beacon identifier in a signal transmitted by the second mobile device. The steps triggered by detection of the emergency event may not be continuously performed. In particular, these steps may not be performed in the background while the first mobile device is in an event detection mode.

The method according to the first aspect may also comprise searching, at predefined points in time (e.g., in a periodic manner), for signals containing beacon identifiers and receiving, for one of the predefined points in time, at least one of (i) a second beacon identifier in a signal transmitted by the second mobile device and (ii) a third beacon identifier in a signal transmitted by any of the stationary beacons. The method may further comprise transmitting, using the cellular communication technology, second location information that includes or has been derived from at least one of the second beacon identifier and the third beacon identifier. The receiving and transmitting steps may be repeated for each predefined point in time. The respectively received and transmitted one or more beacon identifiers may be the same or different. As long as the first mobile device has not, or not significantly, moved between two successive points in time, the received and transmitted one or more beacon identifiers will typically not change. In such situations, the second beacon identifier and the first beacon identifier may be identical. The continuous transmission of beacon identifiers permits the emergency center or another entity to construct a path taken by the individual from the successively received beacon identifiers.

The search for signals containing beacon identifiers at predefined points in time may be carried out by the first mobile device in parallel to obtaining the first beacon identifier upon detection of an emergency event (e.g., in the background while the first mobile device is in an event detection mode). The predefined points in time may sufficiently by spaced apart to prevent a significant depletion of a battery of the first mobile device in view of the associated receiving and transmitting steps. As an example, a minimum temporal distance between two successive points of time may be more than 5, more than 10, or more than 20 minutes (e.g., the temporal distance may be 30 minutes).

The first mobile device may comprise, or may wirelessly or via a wire be coupled to, one or more sensors configured to detect the event associated with the emergency situation. As an example, the first mobile device may comprise an acceleration sensor or a gyroscope to detect an accident (e.g., a fall) of the individual. Additionally, or in the alternative, the first mobile device may comprise at least one sensor configured to determine a physiological parameter (e.g., a heart rate, a body temperature, a blood oxygen content, etc.) of the individual. In some cases, the at least one sensor configured to determine the physiological parameter of the individual may be integrated into a wearable device such as a smartwatch, a wristband or a chest strap. The wearable device may be configured to communicate with the first mobile device via a, or the, short-range wireless communication technology such as Bluetooth.

In one variant, the event associated with the emergency situation is receipt of an emergency notification by the first mobile device via the cellular communication technology from an emergency center. The emergency situation may be a fire alarm relating to a building in which the individual is located.

In another variant, the event associated with the emergency situation is detection of a user input on the first mobile device. In such a case, the individual him- or herself may trigger the obtaining and transmitting steps in regard of the first beacon identifier (e.g., because the individual had an accident but is still conscious and capable of operating the first mobile device).

Alternatively or in addition, the event associated with the emergency situation is detection of an outstanding user input on the first mobile device. As an example, the emergency center may prompt the user, via the first mobile device, to confirm his or her safety in view of a pending or assumed emergency situation. In case the individual does not respond to this prompt (e.g., within a predefined period of time), the outstanding user input may be detected. The obtaining and transmitting steps in regard of the first beacon identifier may then be triggered automatically (e.g., because the individual is unconscious).

Based on the first beacon identifier, the actual location of the individual may be determined in many ways (e.g., centrally at an emergency center). To this end, a mapping between locations and beacon identifiers may be consulted to determine the location of the individual. Assuming that in an indoor scenario the stationary beacons are installed in different rooms, the mapping may, for example, associate individual rooms of a floor plan with individual beacon identifiers of the associated stationary beacons.

According to a second aspect, a method is presented for providing information indicative of a location of an individual within a region in which stationary beacons wirelessly transmitting beacon identifiers are positioned. The method comprises the following steps performed by a second mobile device carried by the individual: receiving, using a short-range wireless communication technology, a first beacon identifier transmitted by one of the stationary beacons; storing the received first beacon identifier; and transmitting the stored first beacon identifier, using the short-range wireless communication technology, for receipt by a first mobile device carried by the individual.

In some variants, the second mobile device continuously transmits the stored first beacon identifier to mimic the stationary beacon from which the first beacon identifier has been received. This continuous transmission of the first beacon identifier by the second mobile device may occur at substantially the same rate as by the stationary beacons (e.g., at a rate ranging from less than 5 transmissions per second to 1 transmission per minute). The transmission of the first beacon identifier by the second mobile device may occur using the same transmission protocol as used by the stationary beacons. As such, the first mobile device may not be able to differentiate between the first beacon identifier being obtained from any of the stationary beacons or from the second mobile device
The method of the second aspect may further comprise receiving, after the first beacon identifier has been received and using the short-range wireless communication technology, a second beacon identifier transmitted by another one of the stationary beacons. The received second beacon identifier may be stored by the second mobile device. The method may further comprise stopping transmission of the first beacon identifier and transmitting the stored second beacon identifier, using the short-range wireless communication technology, for receipt by the first mobile device. Additionally, or in the alternative, the method may further comprise transmitting the stored first beacon identifier and the stored second beacon identifier, using the short-range wireless communication technology, for receipt by the first mobile device. Receipt of multiple successive (and in particular different) beacon identifiers by the emergency center or another entity allows to determine a path taken by the individual along the stationary beacons.

Also provided is a computer program product comprising processor-executable instructions that, when executed on one or more processors, cause the one or more processors to execute the method of any of the preceding steps. The computer program product may be stored on a computer-readable recording medium, such as a semiconductor memory.

A further aspect is directed to a first mobile device configured to be carried by an individual, the first mobile device being configured to support a short-range wireless communication technology and a cellular communication technology, wherein the first mobile device comprises one or more processors configured to control the first mobile device to perform the method according to the first method aspect as described herein.

The first mobile device may be a smartphone with circuitry configured to wirelessly communicate via the cellular communication technology with a base station of a cellular communication network. The smartphone may further be equipped with circuitry configured to wirelessly communicate via the short-range wireless communication technology.

A still further aspect is directed to a second mobile device configured to be carried by an individual, the second mobile device being configured to support a short-range wireless communication technology, wherein the second mobile device comprises one or more processors configured to control the second mobile device to perform the method according to the second method aspect described herein.

The second mobile device may not support a cellular communication technology. Additionally, or in the alternative, the second mobile device may be configured to only support the short-range wireless communication technology for communication with external devices.

The second mobile device may be a wearable device (e.g., integrated in a wristband or a chest band). Additionally, or in the alternative, the second mobile device may comprise an interface (e.g., a hook or clamp) for attaching the second mobile device to an item carried by the individual, for example to an individual's belt or clothes.

Also provided is an emergency response system comprising the first mobile device presented herein and the second mobile device presented herein. As an option, the emergency response system may further comprise two or more stationary beacons each having a nominal transmission range, wherein a distance between one or more adjacent pairs of stationary beacons is larger than the sum of the associated nominal transmission ranges. As understood here, a nominal transmission range is the maximum transmission range that can be achieved by a certain stationary beacon, not taking into account attenuation by walls, trees or other obstacles.

When implementing the teaching provided herein in an emergency response system, it is, in some instances, possible to reduce the number of stationary beacons that needs to be deployed in a building or other region. The second mobile device can take over the role of a stationary beacon in the possibly resulting coverage gaps where there is no signal reception from one of the stationary beacons.

In such or other cases, a battery-saving system implementation can be realized in regard of the first mobile device (e.g., a smartphone) as it does not continuously have to search (e.g., scan) from stationary beacons at a high frequency. The second mobile device, on the other hand, can be realized as a single-purpose device. The second mobile device can thus be optimized for its purpose as a relay or repeater, in particular from a perspective of power consumption.

### Brief Description of the Drawings

Further aspects, details and advantages of the present disclosure will become apparent from the detailed description of exemplary embodiments below and from the drawings, wherein:
- Fig. 1: is a diagram illustrating an exemplary emergency response system of the present disclosure;
- Fig. 2A: is a block diagram illustrating exemplary device realizations of the present disclosure;
- Fig. 2B: is a schematic diagram illustrating an individual carrying a smartphone as an exemplary first mobile device and a badge as an exemplary second mobile device;
- Fig. 3: is a schematic diagram illustrating an exemplary deployment of stationary beacons;
- Figs. 4A & B: are flow diagrams illustrating method realizations of the present disclosure;
- Fig. 5: is a diagram illustrating communication between exemplary device realizations of the present disclosure;
- Fig. 6: is a signalling diagram illustrating operation of the emergency response system in a base operational mode; and
- Fig. 7: is a signalling diagram illustrating operation of the emergency response system in an emergency operational mode.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

While, for example, the following description focuses on an exemplary emergency response system deployments and exemplary communication technologies, the skilled person will understand that other deployments and communication technologies can be used.

Those skilled in the art will further appreciate that the steps, services and functions explained herein may be implemented using individual hardware circuits, using software functioning in conjunction with a programmed processor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that control the one or more processors to perform the steps, services and functions disclosed herein when executed by the one or more processors.

In the following description of exemplary realizations of the present disclosure, the same reference numerals denote the same or similar components.

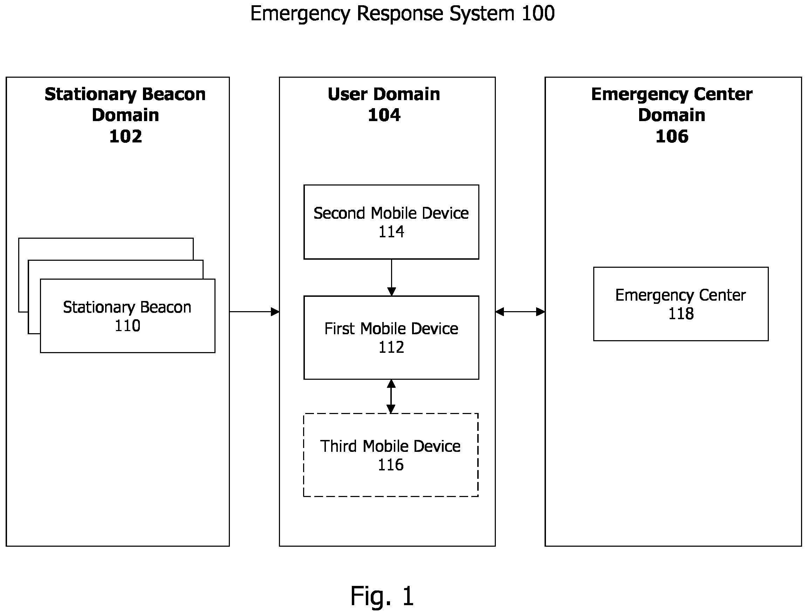

Fig. 1 illustrates an embodiment of an emergency response system 100. The emergency response system 100 comprises three dedicated domains controlled by potentially different domain owners: a stationary beacon domain 102, a user domain 104 and an emergency center domain 106.

The stationary beacon domain 102 comprises multiple stationary beacons 110 controlled by a location service provider. The stationary beacons 110 are positioned in a dedicated region, such as within a building or within an underground system (e.g., a mine). In other deployment scenarios, the stationary beacons 110 are positioned in an outdoor region, for example in the streets of a city. Also combined indoor/outdoor deployments are envisaged. In some implementations, the stationary beacons 110 are (e.g., only) positioned at an entry of a room or other space.

The stationary beacons 110 are configured to wirelessly transmit (e.g., broadcast) beacon identifiers and, possibly, further information. To this end, each stationary beacon 110 supports a short-range wireless communication technology having a transmission range of typically 5m to 25m (e.g., approximately 10m). The short-range wireless communication technology may be Bluetooth (e.g., Version 5.4 or higher). In particular, the Bluetooth Low Energy (BLE) standard may be supported by the stationary beacons 110. BLE permits each of the stationary beacons 110 to broadcast its beacon identifier to nearby mobile devices in an energy-efficient manner.

In some variants, the stationary beacons 110 are configured to transmit beacon identifiers in accordance with the iBeacon protocol, herewith incorporated by reference. In more detail, when implementing the iBeacon protocol the stationary beacons 110 will broadcast, or advertise, packets that contain, inter alia, a 16-byte beacon identifier (called Unique Universal Identifier, UUID) and, optionally, further information.

An iBeacon deployment consists of one or more stationary beacons 110 acting as iBeacon devices that transmit their own beacon identifier (a unique identification number). An application running in the user domain 104 or in the emergency center domain 106 may look up the iBeacon and perform various functions. Receiving devices can also connect to the iBeacons to retrieve values from iBeacon's GATT (generic attribute profile) service.

In other variants, the stationary beacons 110 are configured to transmit beacon identifiers in accordance with the Eddystone protocol (e.g., one or more of TLM, UID, URL), herewith incorporated by reference.

With continued reference to Fig. 1, the user domain 104 comprises a first mobile device 112, a second mobile device 114 and an optional third mobile device 116. The three mobile device 112, 114 and 116 are configured as physically separated entities.

The mobile devices 112, 114 and 116 are carried (e.g., in a pocket or worn) by a particular individual for which location information is to be provided. The devices 112, 114 and 116 are at least primarily controlled by this individual (in a user role).

The first mobile device 112 is configured to support both a short-range
wireless communication technology (in particular Bluetooth, including BLE) and a cellular communication technology (such as a 4G of 5G communication technology like Long Term Evolution, LTE, or New Radio, NR, respectively). In some implementations, the first mobile device 112 is realized as a smartphone on which a localization support application is installed. The localization support application may be configured to control operation of the first mobile device 112 to perform one or more of the steps discussed herein. The localization support application may be configured to support the iBeacon and/or Eddystone protocol.

The first mobile device 112 is configured to communicate with via short-range wireless communication technology with the second mobile device 114, the optional third mobile device 116 and, further optionally, with the stationary beacons 110. The respective communication may be a one-way communication in that the first mobile device 112 is configured to receive the beacon identifiers broadcasted by at least one of the stationary beacons 110 and the second mobile device 114. The short-range wireless communication may be controlled by the localization support application running on the first mobile device 112.

Moreover, the first mobile device 112 is configured to communicate via the cellular communication technology with the emergency center domain 106. Also this communication may be controlled by the localization support application.

The second mobile device 114 illustrated in Fig. 1 is configured to support a short-range wireless communication technology (in particular Bluetooth, including BLE) for communication with both the stationary beacons 110 and the first mobile device 112. The respective communication may be a one-way communication in that the second mobile device 114 is configured to receive the beacon identifiers in packets broadcasted by the stationary beacons 110 and to then broadcast the received beacon identifiers in packets for reception by the first mobile device 112. In an exemplary Bluetooth implementation, the packets with the beacon identifiers may be broadcasted by the stationary beacons 110 and the second mobile device 114 on one or more so-called advertisement channels.

The second mobile device 114 can in certain scenarios be considered as a relay or repeater of the beacon identifiers broadcasted by the stationary beacons 110. The second mobile device 114 can be realized as a single-purpose device optimized for this purpose (e.g., from a perspective of power consumption).

In some variants, the second mobile device 114 is configured as a wearable device such as a wristband or a chest strap. In other implementations the second mobile device 114 takes the form of a badge or token with a mechanical interface (e.g., a clamp or a hook & loop fastener) for being attached to an item carried by the individual (e.g., a belt or to clothing).

The optional third mobile device 116 may be configured to sense physiological parameters of the individual or other parameters, and to communicate the sensed parameters to the first mobile device 112 via a wired or wireless connection (e.g., via the or a short-range wireless communication technology). The first mobile device 112 may then process the one or more sensed parameters to detect an event indicative of an emergency situation. The third mobile device 116 may take the form of a wearable device, such as a smartwatch, a wristband or a chest strap.

The emergency center domain 106 of Fig. 1 comprises an emergency center 118 (also called alarm center). In some variants, the stationary beacon domain 102 and the emergency center domain 106 are controlled by the same operator. In other variants, the operator in charge of the emergency center domain 106 services different stationary beacon domains 102 controlled by different localization service providers.

The emergency center 118 is configured to communicate with the user domain 104 via a voice and/or data connection that stretches over a cellular communication network. As an example, the emergency center 118 could be realized to comprise a hotline or call center. It is to be noted that the emergency center 118 does not have to support a cellular communication technology itself. The emergency center 118 could also be realized to comprise an Internet server for communication with the localization support application installed on the first mobile device 112.

The emergency center 118 serves as recipient for location information transmitted by the first mobile device 112. This location information may include, or may have been derived from, one or more beacon identifiers received by the first mobile device 112 as generally described above.

Based on the one or more beacon identifiers received from the first mobile device 112 for a particular individual, the emergency center 118 determines a current physical or geographical location of the individual. In some implementations, the emergency center 118 triggers transmission of the location information by the first mobile device 112, for example by notifying the first mobile device 112 of an emergency situation (e.g., a fire alarm relating to a building in which the stationary beacons 110 are installed). In other implementations, the first mobile device 112 autonomously triggers transmission of the location information to the emergency center (e.g., if the emergency situation is detected autonomously by the first mobile device 112, possibly using a parameter sensed by the third mobile device 116).

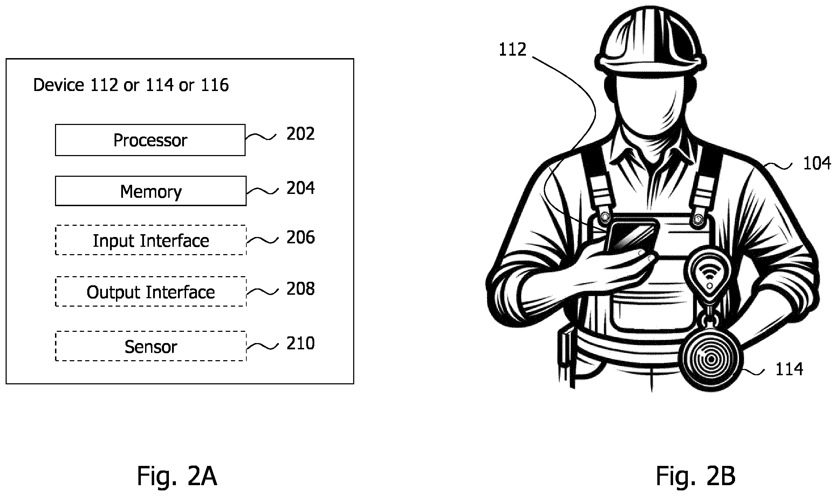

In the following, exemplary realizations of each of the three mobile devices 112, 114 and 116 will be explained with reference to the block diagram of Fig. 2A. As illustrated in Fig. 2A, in one exemplary hardware implementation each device 112, 114 and 116 comprises a processor 202 and a memory 204 coupled to the processor 202. The memory 204 stores program code (e.g., a computer program product) that controls operation of the processor 202 to implement one or more method aspects of the present disclosure. As understood herein, the processor 202 may be realized using any processing circuitry and is not limited to, for example, a single, localized processing core but may, for example, also have a distributed (e.g., cloud-based) topology.

Each device 112, 114 and 116 further comprises an optional input interface 206 and an optional output interface 208 for direct or indirect communication with one of the other devices 112, 114 and 116 and/or a cellular communication network. Further, each of the first mobile device 112 and the third mobile device 116 may comprise one or more sensors 210. The one or more sensors 210 may be configured to sense a respective parameter that allows to detect an event associated with an emergency situation. Exemplary sensor types include an acceleration sensor to detect an accident (e.g., a fall) of the individual, a smoke sensor to detect a fire, and a sensor configured to detect a physiological parameter (e.g., a heart rate).

Fig. 2B is a schematic diagram illustrating an individual 104 carrying a smartphone as an exemplary first mobile device 112 and a badge as an exemplary second mobile device 114.

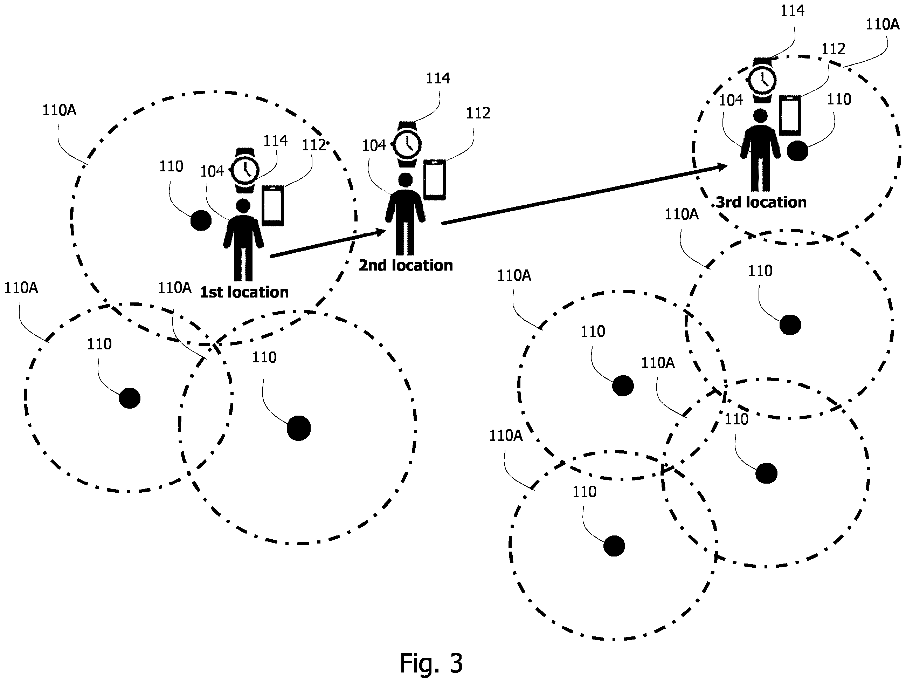

Fig. 3 illustrates an exemplary deployment of the stationary beacons 110 as well as movement of the individual 104 from a first location within the transmission range 110A of one of the stationary beacons 110 to a second location out-of-range of any of the stationary beacons 110 and further on to a third location within the transmission range 110A of a further one of the stationary beacons 110. The individual 104 carries both the first mobile device 112 (e.g., realized as a smartphone) and the second mobile device 116 (e.g., realized as a wearable device such as a badge or as a simple watch without significant power consumption). As an option, the individual 104 may also carry the third mobile device 116 that includes one or more sensors 210 for sensing physiological parameters of the individual 104 (not shown).

As illustrated in Fig. 3, the stationary beacons 110 are deployed such that some of the stationary beacons 110 have overlapping transmission ranges 110A (which is just an option: in other deployment scenarios there may be no overlapping transmission ranges 110A at all). It is important to note that the transmission ranges 110A do not entirely cover the region (e.g., a building) in which the stationary beacons 110 are positioned. As such, there exist significant coverage gaps between the transmission ranges 110A of pairs of adjacent stationary beacons 110. Put another way, the distances between several adjacent pairs of stationary beacons 110 are larger than the corresponding sum of the associated transmission ranges 110A. The various stationary beacons 110 illustrated in Fig. 3 may have identical or different nominal or actual transmission ranges 110A. In the scenario Fig. 3, it is assumed that size differences between actual and nominal transmission ranges 110A of a particular stationary beacon 110 can be neglected. The actual transmission ranges, however, will generally be smaller than the nominal transmission ranges in view of attenuation by walls or other obstacles.

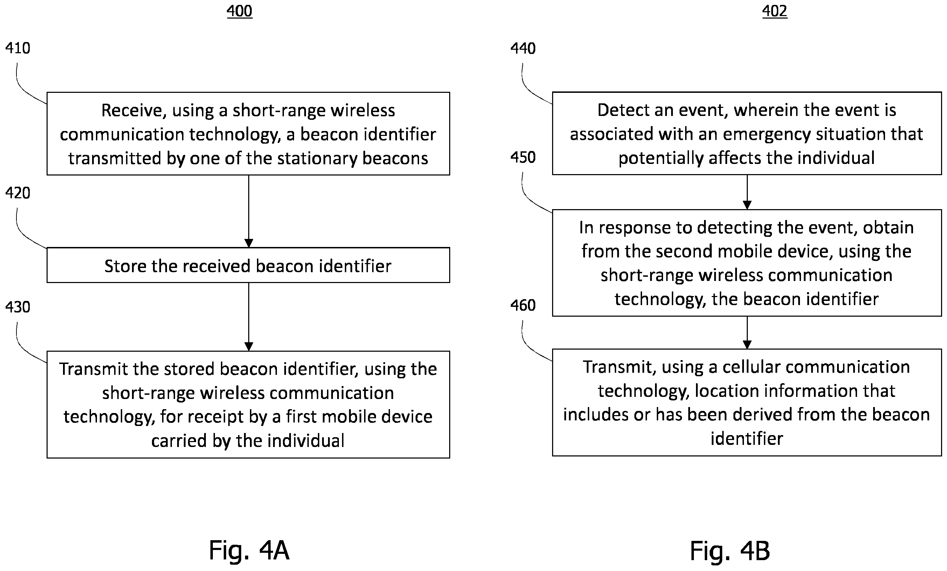

When the individual 104 assumes a location within the transmission range 110A of a particular stationary beacon 110 (see first location in Fig. 3), the first mobile device 112 can directly obtain (i.e., receive) the beacon identifier continuously transmitted by this stationary beacon 110 via the short-range wireless communication technology supported by both the stationary beacon 110 and the first mobile device 112. If, however, the individual 104 moves to another location in a coverage gap (see second location in Fig. 3), the first mobile device 112 can no longer obtain any beacon identifier directly from a stationary beacon 110. This also means that in an emergency situation in which the localization support application running on the first mobile device 112 would attempt to obtain the beacon identifier of the closest stationary beacon 110 for transmission to the emergency center 118, no such localization information can be obtained, at least not from any of the stationary beacons 110 directly. Rather, in such a situation the beacon identifier of the stationary beacon 110 closest to the individual 104 is now obtained by the localization support application from the second mobile device 114 that mimics the closest stationary beacon 110 by continuously transmitting (e.g., broadcasting) the beacon identifier of this stationary beacon 110, as will now be explained in greater detail with reference to the flow diagrams 400 and 402 of Figs. 4A and 4B, respectively.

Flow diagram 400 of Fig. 4A illustrates operation of the second mobile device 114 as illustrated in Figs. 1 to 3. In a first step 410 that is carried out when the individual 104 is positioned in the transmission range of one of the stationary beacons 110 (first location in Fig. 3), the second mobile device 114 receives, using the short-range wireless communication technology such as BLE, a first beacon identifier transmitted (e.g., broadcasted) by that stationary beacon 110. In a second step 420, the second mobile device 114 stores the received first beacon identifier (in an at least temporary memory). Then, in a third step 430, the second mobile device 114 transmits the stored first beacon identifier, using the short-range wireless communication technology, for receipt by a first mobile device 112 carried by the individual 104.

In step 430, the second mobile device 114 continuously transmits (e.g., broadcasts) the stored first beacon identifier to mimic the stationary beacon 110 from which the first beacon identifier has been received, for example in short intervals up to a few seconds. Due to this continuous transmission of the stored first beacon identifier by the second mobile device 114, the first mobile device 112 can still receive the first beacon identifier when being out-of-range of any of the stationary beacons 110 (second location in Fig. 3). For this reason, the localization support application running on the first mobile device 112 can always obtain a beacon identifier, either from one of the stationary beacons 110 ("in-range") or from the second mobile device 114 ("out-of-range"). It should be noted that also in an "in-range" scenario, the beacon identifier obtained by the first mobile device 112 can still be the one transmitted by the second mobile device 114. Also, the first mobile device 112 may obtain (e.g., receive) multiple, possibly different beacon identifiers from different sources at the same time.

The transmission of the first beacon identifier by the second mobile device 114 may occur using the same transmission protocol as used by the stationary beacons 110. As such, the first mobile device 112 may not be able to differentiate between the first beacon identifier being obtained from any of the stationary beacons 110 or from the second mobile device 114. As such, the second mobile device 114 may mimic a stationary beacon 110 from the perspective of the first mobile device 112.

The method illustrated in Fig. 4A may further comprise receiving by the second mobile device 114, after the first beacon identifier has been received and using the short-range wireless communication technology, a second beacon identifier transmitted by another one of the stationary beacons 110. For example, the individual 104 may have moved from the second location illustrated in Fig. 3 to the third location illustrated in Fig. 3, that is covered by the transmission range 110A of a further stationary beacon 110 transmitting the second beacon identifier. The received second beacon identifier may be stored by the second mobile device 114 (e.g., in addition to or instead of the first beacon identifier).

After having stored the second beacon identifier, the second mobile device 114 may stop transmission of the first beacon identifier and transmit the stored second beacon identifier instead, using the short-range wireless communication technology, for receipt by the first mobile device 112 (as generally described above for the first beacon identifier). Additionally, or in the alternative, the second mobile device 114 may transmit the stored first beacon identifier and the stored second beacon identifier together, using the short-range wireless communication technology, for receipt by the first mobile device 112 (e.g., as an ordered list potentially including further beacon identifiers). Transmission of multiple successive (and in particular different) beacon identifiers by the second mobile device 114, either individually or as an ordered list, allows to reconstruct a path taken by the individual 104 along the stationary beacons 110.

Flow diagram 402 of Fig. 4B illustrates operation of the first mobile device 112 as illustrated in Figs. 1 to 3. The method illustrated in Fig. 4B may be performed by the first mobile device 112 in parallel to the method illustrated in Fig. 4A, that is performed by the second mobile device 114.

In a first step 440, the first mobile device 112 detects an event. The event is associated with an emergency situation that potentially affects the individual. In one variant, the event associated with the emergency situation can be receipt of an emergency notification by the first mobile device 112 via the cellular communication technology from the emergency center 118. The emergency situation may be a fire alarm relating to a building in which the individual 104 is located. In another variant, the event associated with the emergency situation is detection of a user input on the first mobile device 112. In such a case, the individual 104 him- or herself may report the emergency situation (e.g., because the individual 104 had an accident but is still conscious and capable of operating the first mobile device). Alternatively, the event can be detection of an outstanding user input on the first mobile device 112. As an example, the emergency center 118 may prompt the individual 104, via the first mobile device 112, to confirm his or her safety in view of a pending or assumed emergency situation. In case the individual 104 does not respond to this prompt (e.g., within a predefined period of time), the outstanding user input may be detected in step 440. As a still further variant, the first mobile device 112 may detect the event in step 440 based one or more parameters sensed by one or more of the sensors 210.

With continued reference to Fig. 4B, the first mobile device 112 obtains in step 450 from the second mobile device 114, in response to detecting the event and using the short-range wireless communication technology, the first beacon identifier. As explained above the second mobile device 114 may continuously broadcast the first beacon identifier for reception by the first mobile device 112.

In a further step 460, the first mobile device 112 transmits, using the cellular communication technology, first location information that includes or has been derived from the first beacon identifier. The first location information is transmitted towards the emergency center domain 106 so that the emergency center 118 can determine the location of the individual 104 and instruct (e.g., guide) rescue personnel accordingly.

In one implementation, the location information is transmitted as (e.g., in an emergency operational mode) or with an emergency notification to the emergency center 118. Such an emergency notification may in particular be provided in case the event indicative of an emergency situation is detected locally by the first mobile device 112 (e.g., on the basis of a signal from the sensor 210 of the first mobile device 112 or the third mobile device 116 or on the basis of a user input). In response to receipt of the emergency notification at the emergency center 118, the emergency center 118 may attempt to call the individual 104 and/or send a rescue team to the geographical site indicated by the location information.

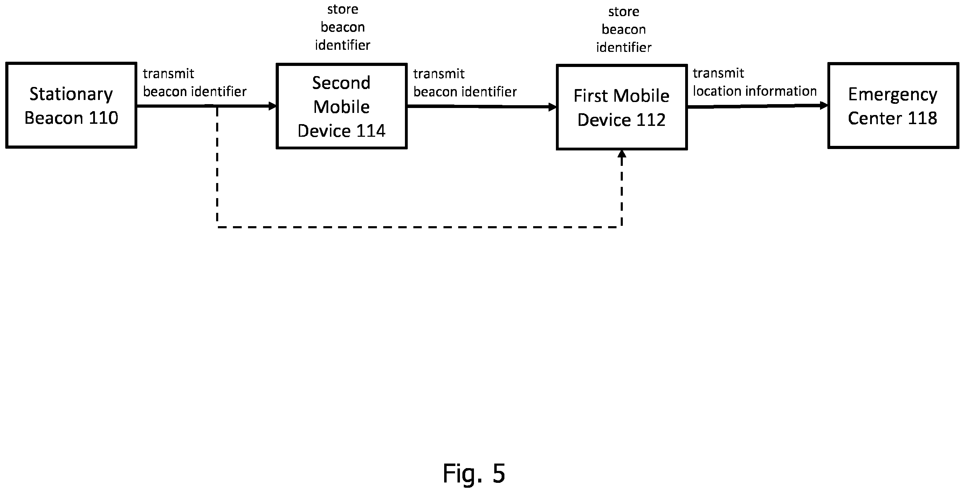

The transmission chain of a beacon identifier as discussed above with reference to Figs. 4A and 4B is also illustrated in Fig. 5. As becomes apparent from the dashed arrow and explained above with reference to Fig. 3, the first mobile device 112 may directly obtain the beacon identifier, using the short-range wireless communication technology, also from one of the stationary beacons 110 in case it resides within its transmission range. In such implementations, the first mobile device 112 may obtain the beacon identifier in parallel from the stationary beacon 110 and the second mobile device 114, which increases system safety as the probability of obtaining any beacon identifier at all is increased.

In other implementations, the first mobile device 112 may not support a communication technology used by the stationary beacons 110 to transmit the beacon identifiers, so that the beacon identifiers can only be obtained from the second mobile device 114. As an example, the stationary beacons 110 may only support a first transmission protocol such as iBeacon, whereas the first mobile device 112 only supports a second transmission protocol such as Eddystone. The second mobile device 114 may then function as protocol translator for the first mobile device 112 from iBeacon to Eddystone.

The first mobile device 112 may be configured to perform one or more dedicated operations to obtain the first beacon identifier in step 450. These one or more operations may be triggered by detection of the emergency event that potentially affects the individual 104 in step 440. For example, to obtain the first beacon identifier the first mobile device 112 may search (e.g., scan) for signals containing beacon identifiers. The search may be triggered by the localization support application running on the first mobile device 112. In the context of this search, obtaining the first beacon identifier may comprise receiving the first beacon identifier in a signal transmitted by the second mobile device 114 (or any of the stationary beacons 110 directly, see also Fig. 5). The operations triggered by detection of the emergency event in step 440 may not be continuously performed. In particular, these operations may not be performed in the background while the first mobile device 112 is in an event detection mode (i.e., continuously performs step 440 until an event is detected).

One possibility for the first mobile device 112 to obtain a beacon identifier is the event-driven procedure discussed above with reference to Fig. 4B. Another possibility is to search for signals containing beacon identifiers at predefined points in time, for example in a periodic manner. Each search is associated with a significant power consumption for the battery-operated first mobile device 112. For power saving reasons, the periodic search should therefore be carried out with a periodicity of at least 10 minutes (e.g., of 30 minutes). As an aside, this is also the reason why steps 450 and 460 of Fig. 4B are not performed continuously but in an event-driven manner, supported by the continuous transmission of the power-optimized second mobile device 114.

In the periodic search, the first mobile device 112 may receive at least one of (i) a second beacon identifier in a signal transmitted by the second mobile device 114 and (ii) a third beacon identifier in a signal transmitted by any of the stationary beacons 110 (see also Fig. 5). The first mobile device 112 may then transmit to the emergency center 118, using the cellular communication technology, second location information that includes or has been derived from at least one of the second beacon identifier and the third beacon identifier. The second and further location information periodically transmitted by the first mobile device 112 permits the emergency center 118 or another entity to construct a path taken by the individual 104 from the successively received beacon identifiers. The periodic search for signals containing beacon identifiers may be carried out by the first mobile device 112 in parallel to obtaining the first beacon identifier upon detection of an emergency event in step 440 (e.g., in the background while the first mobile device 112 is in the event detection mode).

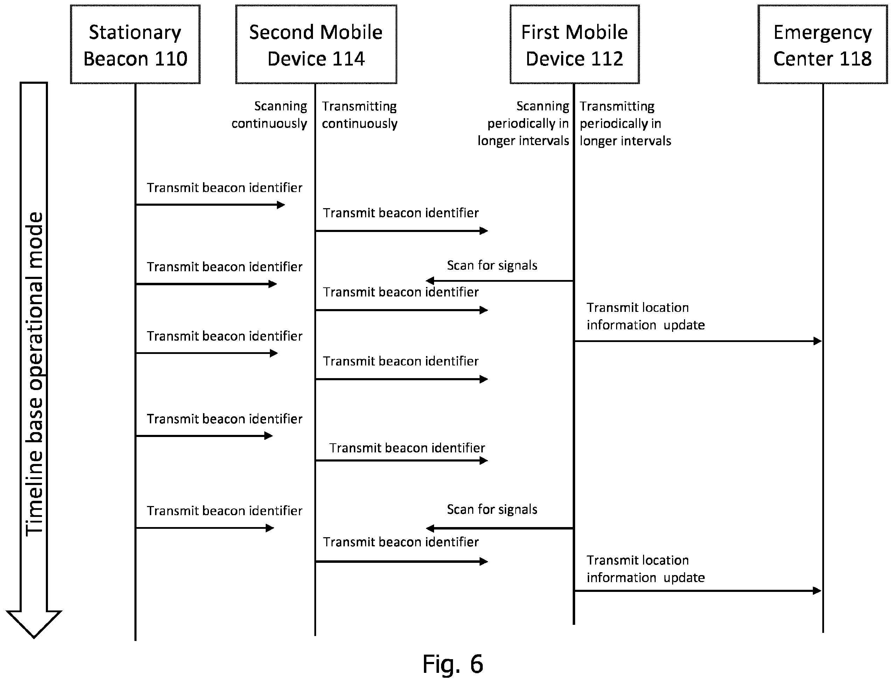

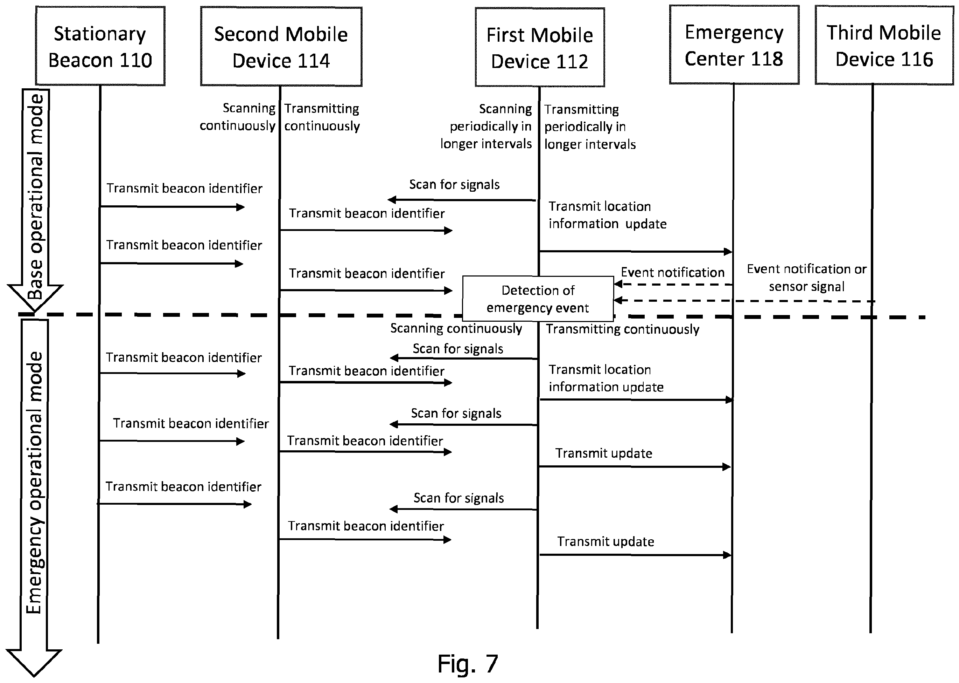

The periodic search for beacon identifiers by the first mobile device 112 can thus be regarded as its base operational mode. When an emergency situation is detected in step 440, the first mobile device 112 enters an emergency operational mode and - in addition to the regular location information reports sent to the emergency center 118 - performs a location update (see step 450) and sends an emergency-related immediate location information report (see step 460). The base operational mode and the emergency operational mode are illustrated in the signalling diagrams of Figs. 6 and 7, respectively. In some variants, these signalling diagrams may conform to the iBeacon protocol. In other variants, the Eddystone protocol or any other localization protocol may be implemented.

It is to be noted that the arrows in Figs. 6 and 7 that do not fully stretch to another entity are intended to indicate broadcast transmissions/receptions. It should further be noted that the operational modes illustrated in Figs. 6 and 7 work in the same manner regardless of whether or not any of the first mobile device 112 and the second mobile device 114 are within the transmission range 110A of any stationary beacon 110. In an out-of-range scenario, the second mobile device 114 will continue broadcasting (at least) the last beacon identifier it has received from any stationary beacon 110, which can then be found by the first mobile device 112 when scanning for signals containing beacon identifiers.

In the base operational mode illustrated in Fig. 6, the second mobile device 114 continuously scans for beacon signals from the stationary beacons 110 and continuously transmits (e.g., repeats or relays) those, as generally described above. The scanning and transmitting operations are carried out in short cycles (i.e., at a high rate such as every second or more often). The first mobile device 112 periodically scans for beacon signals (from either the second mobile device 114 or any of the beacons) and transmits corresponding location information updates to the emergency center 118. The periodicity of the corresponding scanning and transmitting operations is comparatively long (e.g., every 30 minutes) to save battery power.

The emergency operational mode illustrated in Fig. 7 is entered from the base operational mode (or executed in parallel to the base operational mode) upon the first mobile device 112 detecting an emergency event in step 440. The detection may be triggered by reception of an emergency event notification from the emergency center 118 (e.g., due to a fire alarm) or from the third mobile device 116 (e.g., due to a third mobile device 116 no longer detecting a heart rate). The detection may also be triggered locally based on a user input or based on an analysis of a sensor signal generated by the first mobile device 112 or provided by the third mobile device 116 to the first mobile device 112. In the emergency operational mode, the first mobile device 112 starts to continuously scan for beacon signals (e.g., once per second or more often) and transmits the corresponding location information immediately and, optionally, continuously (e.g., at the same rate of once per second or more often) to the emergency center 118.

As has become apparent from the above description of exemplary embodiments, the technique presented herein in some implementations allows to reduce the number of stationary beacons 110 that needs to be deployed in a building or other region. The second mobile device 114 can take over the role of a stationary beacon in the possibly resulting coverage gaps where there is no signal reception from any of the stationary beacons 110. While such coverage gaps can intentionally be defined to be rather large if a lower localization resolution is acceptable (e.g., having a size corresponding to 50%, 100% or more of the nominal transmission range of a stationary beacon 110), in other implementations the size of such gaps can be minimized by spacing each pair of adjacent stationary beacons 110 at approximately the sum of their nominal transmission ranges and having the second mobile device 114 fill the gaps resulting for signal attenuation by possible obstacles. The second mobile device 114 is also helpful in dense stationary beacon deployments without any planned coverage gaps if such gaps can result temporarily (e.g., from moving obstacles).

Moreover, a battery-saving system implementation can be realized in regard of the first mobile device 112 (e.g., a smartphone) as it does not, or at least not continuously at a high rate (e.g., more than once per minute), have to search (e.g., scan) for beacon signals. Rather, it may only enter a (possibly high-rate) scanning mode, i.e., an emergency operational mode, when an emergency event is indeed detected. The second mobile device 114, on the other hand, can be realized as a single-purpose device and can thus be optimized for its purpose as a relay or repeater, in particular from a perspective of power consumption. Compared to the first mobile device 112, the second mobile device 114 may continuously search (e.g., scan) for beacon signals (at rate that is at least 10, 100 or 1000 times higher than the rate applied by the first mobile device 112).

## Claims

1. A method for providing information indicative of a location of an individual (104) within a region in which stationary beacons (110) wirelessly transmitting beacon identifiers are positioned, the method comprising the following steps performed by a first mobile device (112) carried by the individual (104), wherein the individual (104) also carries a second mobile device (114) configured to receive and store at least a first beacon identifier transmitted by any of the stationary beacons (110):
detecting (440) an event, wherein the event is associated with an emergency situation that potentially affects the individual (104);
in response to detecting the event, obtaining (450) from the second mobile device (114), using a short-range wireless communication technology, the first beacon identifier; and
transmitting (460), using a cellular communication technology, first location information that includes or has been derived from the first beacon identifier.

2. The method of claim 1, wherein
the stationary beacons (110) are transmitting the beacon identifiers using the short-range wireless communication technology, and wherein the first mobile device (112) is configured to directly obtain the first beacon identifier, using the short-range wireless communication technology, also from one of the stationary beacons (110).

3. The method of claim 2, wherein
the second mobile device (114) mimics a stationary beacon such that the first mobile device (112) cannot differentiate between the first beacon identifier being obtained from any of the stationary beacons (110) or from the second mobile device (114).

4. The method of any one of the preceding claims, wherein
at a point in time when the first beacon identifier is obtained from the second mobile device (114), the first mobile device (112) cannot receive any beacon identifier from the stationary beacons (110).

5. The method of any one of the preceding claims, wherein
the first mobile device (112) cannot receive any beacon identifier from the stationary beacons (110) because at least one of the following conditions applies:
a. the beacon identifiers are transmitted by the stationary beacons (110) using the short-range wireless communication technology and the first mobile device (112) is located out-of-range of any of the stationary beacons (110);
b. the first mobile device (112) does not support a communication technology used by the stationary beacons (110) to transmit the beacon identifiers.

6. The method of any one of the preceding claims, wherein obtaining the first beacon identifier comprises at least one of the following steps:
searching, in response to detecting the event, for signals containing beacon identifiers; and
receiving the first beacon identifier in a signal transmitted by the second mobile device (114).

7. The method of any one of the preceding claims, further comprising
searching, at predefined points in time, for signals containing beacon identifiers;
receiving, for one of the predefined points in time, at least one of (i) a second beacon identifier in a signal transmitted by the second mobile device (114) and (ii) a third beacon identifier in a signal transmitted by any of the stationary beacons (110); and
transmitting, using the cellular communication technology, second location information that includes or has been derived from at least one of the second beacon identifier and the third beacon identifier.

8. The method of any one of the preceding claims, wherein
the first mobile device (112) comprises, or is wirelessly or via a wire coupled to, one or more sensors (210) configured to detect the event associated with the emergency situation.

9. The method of claim 8, wherein
the one or more sensors (210) comprise one or more of an acceleration sensor configured to detect an accident of the individual and at least one sensor configured to determine a physiological parameter of the individual.

10. The method of any one of the preceding claims, wherein
the event associated with the emergency situation is receipt of an emergency notification by the first mobile device (112) via the cellular communication technology from an emergency center (118).

11. The method of any one of the preceding claims, wherein
the event associated with the emergency situation is at least one of
a. detection of a user input on the first mobile device (112);
b. detection of an outstanding user input on the first mobile device (112).

12. A method for providing information indicative of a location of an individual (104) within a region in which stationary beacons (110) wirelessly transmitting beacon identifiers are positioned, the method comprising the following steps performed by a second mobile device (114) carried by the individual (104):
receiving (410), using a short-range wireless communication technology, a first beacon identifier transmitted by one of the stationary beacons (110);
storing (420) the received first beacon identifier; and
transmitting (430) the stored first beacon identifier, using the short-range wireless communication technology, for receipt by a first mobile device (112) carried by the individual.

13. The method of claim 12, wherein
the second mobile device (114) continuously transmits the stored first beacon identifier to mimic the stationary beacon (110) from which the first beacon identifier has been received.

14. The method of claim 12 or 13, comprising
receiving, after the first beacon identifier has been received and using the short-range wireless communication technology, a second beacon identifier transmitted by another one of the stationary beacons (110);
storing the received second beacon identifier; and
further comprising at least one of
a. stopping transmission of the first beacon identifier and transmitting the stored second beacon identifier, using the short-range wireless communication technology, for receipt by the first mobile device (112); and
b. transmitting the stored first beacon identifier and the stored second beacon identifier, using the short-range wireless communication technology, for receipt by the first mobile device (112).

15. A computer program product comprising processor-executable instructions that, when executed on one or more processors (202), cause the one or more processors (202) to execute the method of any of the preceding steps.

16. A first mobile device (112) configured to be carried by an individual (104), the first mobile device (112) being configured to support a short-range wireless communication technology and a cellular communication technology, wherein the first mobile device (112) comprises one or more processors (202) configured to control the first mobile device (112) to perform the method of any one of claims 1 to 11.

17. The first mobile device of claim 16, wherein
the first mobile device (112) is a smartphone configured to wirelessly communicate via the cellular communication technology with a base station of a cellular communication network.

18. A second mobile device (114) configured to be carried by an individual (104), the second mobile device (114) being configured to support a short-range wireless communication technology, wherein the second mobile device (114) comprises one or more processors (202) configured to control the second mobile device (114) to perform the method of any one of claims 12 to 14.

19. The second mobile device of claim 18, wherein
the second mobile device (114) is a wearable device and/or comprises an interface for attaching the second mobile device to an item carried by the individual (104).

20. An emergency response system (100) comprising
the first mobile device (112) of claim 16 or 17;
the second mobile device (114) of claim 18 or 19; and, optionally,
two or more stationary beacons (110) each having a nominal transmission range (110A), wherein a distance between one or more adjacent pairs of stationary beacons (110) is larger than the sum of the associated nominal transmission ranges (110A).
